# EUROPÄISCHE PATENTANMELDUNG

(11) **EP 2 353 954 A1**
(43) Veröffentlichungstag der Anmeldung: **10.08.2011**
(21) Anmeldenummer: 11151478.2
(22) Anmeldetag: 20.01.2011
(51) Int. Cl.: B60T 17/08, B60T 17/00, F16J 15/32, F16J 15/56

(54) **Federspeicherbremszylinder mit einer wenigstens eine umlaufende Nut beinhaltenden Dichtung**

(30) Priorität: 28.01.2010 DE 102010006048
(71) Anmelder: KNORR-BREMSE Systeme für Nutzfahrzeuge GmbH, 80809 München (DE)
(72) Erfinder: Fantazi, Alain, 14160, Dives sur mer (FR); Delalonde, Philippe, 14590, Moyaux (FR)
(74) Vertreter: Mattusch, Gundula

(57) **Zusammenfassung**

Die Erfindung betrifft einen pneumatischen Federspeicherbremszylinder (1) für Bremsanlagen von Fahrzeugen, mit einem im Gehäuse des Federspeicherbremszylinders (4) angeordneten, durch wenigstens eine Speicherfeder (10) betätigbaren Federspeicherbremskolben (8), wobei der Federspeicherbremskolben (8) an seiner radial äußeren Umfangsfläche eine als Bewegungsdichtung ausgebildete Dichtungsanordnung (52) trägt, welche wenigstens ein Dichtungselement (62) mit einem Dichtungsabschnitt (60) beinhaltet, welcher einen schwalbenschwanzförmigen Querschnitt mit zwei sich radial elastisch aufspreizenden Schenkeln (64, 66) aufweist, wobei der eine Schenkel (64) gegen den Federspeicherbremszylinder (4) und der andere Schenkel (66) gegen den Federspeicherbremskolben (8) dichtet.

Die Erfindung sieht vor, dass der gegen den Federspeicherbremszylinder (4) dichtende Schenkel (64) des Dichtungselements (62) an seiner mit einer Lauffläche (54) des Federspeicherbremszylinders (4) zusammen wirkenden Wirkfläche (76) mit wenigstens einer in Bezug zur Umfangsrichtung umlaufenden Ringnut (74) versehen ist.

## Beschreibung

### Stand der Technik

Die Erfindung geht aus einem pneumatischen Federspeicherbremszylinder für Bremsanlagen von Fahrzeugen, mit einem im Gehäuse des Federspeicherbremszylinders angeordneten, durch wenigstens eine Speicherfeder betätigbaren Federspeicherbremskolben, wobei der Federspeicherbremskolben an seiner radial äußeren Umfangsfläche eine als Bewegungsdichtung ausgebildete Dichtungsanordnung trägt, welche wenigstens ein Dichtungselement mit einem Dichtungsabschnitt beinhaltet, welcher einen schwalbenschwanzförmigen Querschnitt mit zwei sich radial elastisch aufspreizenden Schenkeln aufweist, wobei der eine Schenkel gegen den Federspeicherbremszylinder und der andere Schenkel gegen den Federspeicherbremskolben dichtet, gemäß dem Oberbegriff von Anspruch 1.

Ein kombinierter Betriebsbrems- und Federspeicherbremszylinder mit einem gattungsgemäßen pneumatischen Federspeicherbremszylinder ist aus der DE 40 11 739 A1 bekannt. Der Federspeicherbremskolben weist eine Kolbenstange auf, welche ein Entlüftungsventil trägt, das eine Strömungsverbindung zwischen der Federkammer und der Betriebsbremskammer herstellt oder sperrt. Das Entlüftungsventil ist dort endseitig im hohlen Kolbenrohr des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Federspeicherbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern über den Be-und Entlüftungsweg der Betriebsbremskammer. Deshalb spricht man in diesem Zusammenhang auch von innerer Entlüftung.

Beim Anfahren an einer ansteigenden Fahrstrecke ist es jedoch bei zunächst zugespannter Feststellbremse notwendig, vor dem Lösen der Feststellbremse wenigstens kurzzeitig zusätzlich die Betriebsbremse zuzuspannen, um ein Zurückrollen des Fahrzeugs beim Anfahren zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort wird sie durch den Dichtspalt zwischen dem äußeren Schenkel des Dichtungselements des Federspeicherbremskolbens und der Lauffläche des Federspeicherzylinders sowie die Gehäusedichtung in die Atmosphäre gepresst, was störende Pfeifgeräusche verursacht.

Die DE 10 2006 005 031 A1 schlägt zur Lösung des Problems der störenden, auf Luftströmungen basierenden Geräusche vor, den radial äußeren Schenkel eines U-förmigen Elastomer-Dichtungselements des Federspeicherbremskolbens mit sich in axialer Richtung, d.h. in Richtung der Mittelachse des Federspeicherbremszylinders erstreckenden Nuten zu versehen, welche als Sacklöcher zur Federkammer hin geöffnet und zur Federspeicherbremskammer hin geschlossen sind. Unter den eingangs genannten Betriebsbedingungen kann dann Druckluft von der Federkammer zunächst in die Ausnehmungen der Elastomerdichtung und dann an einer Dichtlippe der Elastomerdichtung vorbei in die Federspeicherbremskammer entweichen. Es hat sich herausgestellt, dass die störenden Pfeifgeräusche durch diese Maßnahme zwar reduziert, jedoch nicht auf ein akzeptables Maß gebracht werden konnten.

Gemäß der bisher unveröffentlichten DE 10 2008 0476 33.1 beinhaltet die Dichtungsanordnung einen den Federspeicherbremskolben entlang einer Lauffläche des Federspeicherbremszylinders führenden Führungsring aus einem gegenüber dem Material wenigstens eines Dichtungselements steiferen Material, wobei das Dichtungselement aus einem mit dem Führungsring durch Urformen wie Spritzgießen oder Spritzpressen verbundenen Elastomer besteht. Der steife Führungsring ist an seiner radial äußeren Arbeitsfläche mit sich in axialer Richtung erstreckenden, eine Strömungsverbindung zwischen der zur Federkammer weisenden Stirnfläche des Führungsrings und der zu einem Dichtungsabschnitt des Dichtungselements weisenden Stirnfläche des Führungsrings schaffenden radial äußeren Ausnehmungen versehen, welche störende Strömungsgeräusche reduzieren. Gegenüber dem zuletzt genannten Stand der Technik wurden daher die axialen Nuten vom elastischen Dichtungselement in einen dort nicht verwendeten Führungsring aus steiferem Material verlegt. Auch hier hat sich herausgestellt, dass die störenden Pfeifgeräusche durch die beschriebenen Maßnahmen zwar reduziert, jedoch nicht auf ein akzeptables Maß gebracht werden konnten.

Der vorliegenden Erfindung liegt demgegenüber die Aufgabe zugrunde, einen pneumatischen Federspeicherbremszylinder der eingangs erwähnten Art derart weiter zu entwickeln, dass die in bestimmten Betriebssituationen auftretenden, auf Luftströmungen zurückzuführenden Geräusche noch weiter reduziert oder vermieden werden.

Diese Aufgabe wird erfindungsgemäß durch die Merkmale von Anspruch 1 gelöst.

### Offenbarung der Erfindung

Gattungsgemäße Dichtungselemente mit U-förmigen Querschnitt, d.h. mit schwalbenschwanzförmigen Querschnitt und zwei sich radial elastisch aufspreizenden Schenkeln weisen im Einsatz bei Federspeicherbremszylindern gute Dichtigkeitseigenschaften auf, wenn das Druckgefälle sich von einem hoher Druck in der be- und entlüftbaren Federspeicherbremskammer zu einem gegenüber niedrigeren Druck in der die Speicherfeder beherbergenden Federkammer erstreckt. Dann sorgt der in dem Zwischenraum zwischen den beiden elastischen Schenkeln des Dichtungselements anstehende, in der Federspeicherbremskammer herrschende hohe Druck dafür, dass sich die beiden Schenkel voneinander weg abspreizen und somit der radial äußere Schenkel gegen die Lauffläche des Federspeicherbremszylinders und der radial innere Schenkel gegen das Kolbenhemd des Federspeicherbremskolbens einen größeren Anpressdruck erfahen und damit eine gute Abdichtung erzielt wird.

Diese positive Eigenschaft, welche auch von den elastischen Eigenschaften des Dichtungselements und insbesondere der beiden Schenkel herrührt hat im eingangs beschriebenen umgekehrten Fall eines höheren Drucks in der Federkammer und damit einer von der Federkammer in die Federspeicherbremskammer gerichteten Strömung der Druckluft den Nachteil, dass diese den radial äußeren Schenkel des Dichtungselements von der Lauffläche des Bremszylinders unter Erzeugung eines schmalen radialen Spalts abheben lässt. Durch diesen schmalen Spalt hindurch erfährt die Strömung der Druckluft eine sehr hohe Strömungsgeschwindigkeit. Da sich hinter dem radial äußeren Schenkel des Dichtungselements der Raum zur Federspeicherbremskammer hin schlagartig weitet wird die Luftströmung dort stark verwirbelt. Diese verwirbelte Luftströmung bzw. der aus ihr resultierende Luftschall erzeugt in der Federspeicherbremskammer als Resonanzraum und den dadurch ebenfalls zu Schwingungen angeregten Wänden die störenden Geräusche.

Die Anmelderin hat nun herausgefunden, dass wenn der gegen den Federspeicherbremszylinder dichtende Schenkel des Dichtungselements an seiner mit einer Lauffläche des Federspeicherbremszylinders zusammen wirkenden Wirkfläche mit wenigstens einer in Bezug zur Umfangsrichtung umlaufenden Ringnut versehen ist, die störenden Strömungsgeräusche signifikant reduziert werden können.

Die Ringnut ist dabei ausschließlich zur Vermeidung von störenden Geräuschen vorgesehen, wenn Druckluft von der Federkammer in die Federspeicherbremskammer des Federspeicherbremszylinders am Dichtungselement vorbei strömt und nicht etwa zur Aufnahme von Schmierstoff oder zum Formschluss mit anderen Bauteilen. Mit anderen Worten ist die Ringnut ausschließlich zur Beeinflussung der zwischen der Lauffläche des Federspeicherbremszylinders und dem gegen diese dichtenden, die Ringnut aufweisenden radial äußeren Schenkel des Dichtungselements strömenden Druckluft vorgesehen. Die Anmelderin hat herausgefunden, dass durch diese Ringnut die Tendenz der Luftströmung abnimmt, beim Eintreten in die Federspeicherbremskammer Verwirbelungen auszubilden, was eine geringere Geräuschentwicklung zur Folge hat.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist der der gegen den Federspeicherbremszylinder dichtende Schenkel des Dichtungselements an seiner mit der Lauffläche des Federspeicherbremszylinders zusammen wirkenden Wirkfläche mit wenigstens zwei, in Axialrichtung des Federspeicherbremszylinders gesehen hintereinander angeordneten Ringnuten versehen.

Gemäß einer Weiterbildung beinhaltet die Dichtungsanordnung weiterhin einen den Federspeicherbremskolben gegenüber einer Lauffläche des Federspeicherbremszylinders mit seiner radial äußeren Arbeitsfläche führenden Führungsring, wobei die Arbeitsfläche des Führungsrings dem Dichtungsabschnitt des Dichtungselements in Strömungsrichtung von der Federkammer in die Federspeicherbremskammer gesehen vorgeordnet ist und der Führungsring aus einem gegenüber dem Material des wenigstens einen Dichtungselements steiferen Material besteht

Gemäß einer besonders zu bevorzugenden Maßnahme ist vorgesehen, dass
a) die radial äußere Umfangsfläche eines Kolbenhemds des Federspeicherbremskolbens einen wenigstens teilweise umlaufenden Vorsprung aufweist,
b) das Dichtungselement an einem dem Dichtungsabschnitt in Strömungsrichtung von der Federkammer in die Federspeicherbremskammer gesehen vorgeordneten Lagerabschnitt eine radial äußere, wenigstens teilweise umlaufende Ausnehmung aufweist,
c) der Führungsring derart radial elastisch aufweitbar ist, dass er unter radial elastischer Aufweitung und anschließender Rückfederung
d) mit einem Lagerabschnitt in eine radial äußere Ausnehmung am Kolbenhemd des Federspeicherbremskolbens eingreift und
e) mit einem die zum Dichtungsabschnitt des Dichtungselements weisende Stirnfläche beinhaltenden Halteabschnitt wenigstens den Vorsprung des Kolbenhemds axial übergreifend und in die Ausnehmung des Lagerabschnitts des Dichtungselements radial eingreifend das Dichtungselement am Kolbenhemd des Federspeicherbremskolbens hält.

Demzufolge braucht zur Montage der Dichtungsanordnung lediglich das Dichtungselement am Kolbenhemd des Federspeicherbremskolbens positioniert und dann der Führungsring unter elastischer Aufweitung und anschließender Rückfederung aufgesetzt werden, wodurch der Führungsring das Dichtungselement am Federspeicherbremskolben lagert und auch selbst dort fixiert ist.

Der Führungsring besteht dabei bevorzugt aus einem Kunststoff wie aus Acetal und das Dichtungselement aus einem Elastomer.

Besonders bevorzugt ist der Federspeicherbremszylinder mit einem Betriebsbremszylinder zu einem kombinierten Betriebsbrems- und Federspeicherbremszylinder zusammengefasst und der Betriebsbremszylinder weist einen im Gehäuse des Betriebsbremszylinders angeordneten Betriebsbremskolben auf.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines Kombizylinders mit einer Dichtungsanordnung gemäß einer bevorzugten Ausführungsform der Erfindung;
- Fig.2: eine Querschnittdarstellung der Dichtungsanordnung von Fig.1;

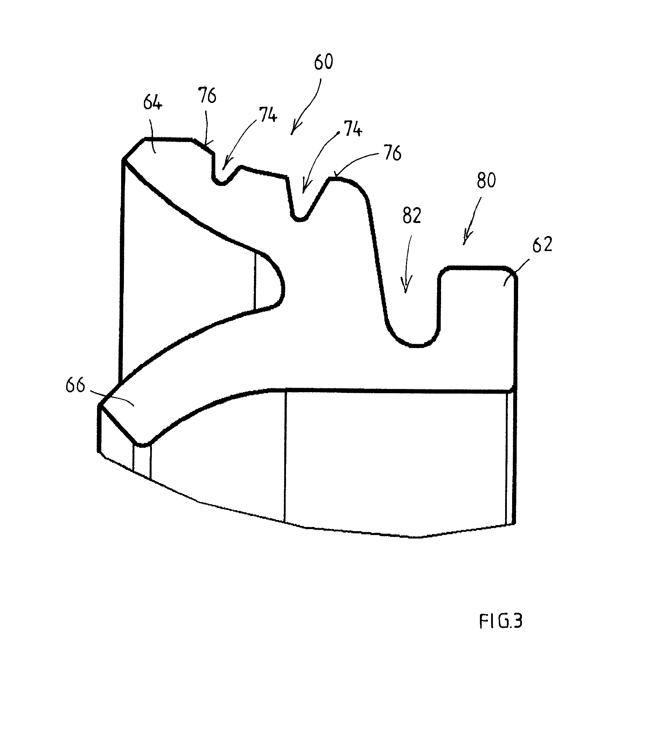

- Fig.3: eine Querschnittsdarstellung eines Dichtungselements der Dichtungsanordnung von Fig.1.

### Beschreibung des Ausführungsbeispiels

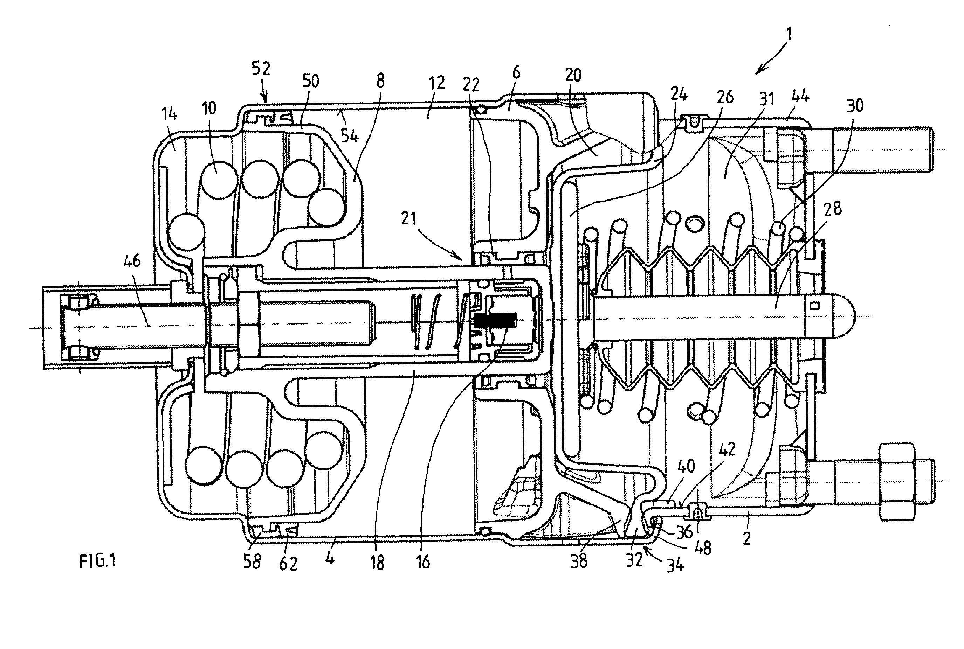

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Federspeicherbremskolbenstange 18 verbunden, welche sich durch die Zwischenwand 6 in eine Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung zentrierender Zentrierring vorgesehen ist.

Nicht zuletzt liegt die radial innere Umfangsfläche 42 des Betriebsbremszylinders 2, gegen welche der Zentrierring 40 zentriert, bevorzugt auf einem gedachten Zylinder, dessen Mittelachse koaxial zur Zylinderachse 46 ist. Der Zentrierring 40 kann wie gezeigt in Umfangsrichtung gesehen vollständig umlaufend oder aus Ringabschnitten bestehend ausgebildet sein. Die Membrane 24 ist bevorzugt aus Gummi gefertigt und der Zentrierring 40 mit ihr einstückig ausgebildet.

Dann sorgt eine eine axiale Komponente aufweisende Klemmkraft der gegeneinander geklemmten Zwischenwand 6 und Betriebsbremszylinder 2 dafür, dass der Zentrierring 40 der Membrane 24 gegen die radial innere Umfangsfläche 42 der Wandung 44 des Betriebsbremszylinders 2 gepresst wird. Mit anderen Worten sorgt die axiale Komponente der Klemmkraft dafür, dass der Befestigungsrand 32 aufgrund der Keilwirkung nach radial außen gezogen und dadurch der Zentrierring 40 mit höherer radialer Kraft gegen die radial innere Umfangsfläche 42 der Wandung 44 des Betriebsbremszylinders 2 im Sinne einer Selbstverstärkung der Zentrierung gepresst wird.

Realisierbar ist eine solche axiale Klemmkraftkomponente beispielsweise dadurch, dass der einen Flansch 36 ausbildende Rand des Betriebsbremszylinders 2 sowie der Flansch 38 der Zwischenwand 6 von einem Rand 48 der Wandung des Federspeicherbremszylinders 4 nach Art einer Bördelung übergriffen werden, welche beispielsweise durch einen Umformprozess hergestellt wird. Diese Bördelung sorgt dann für die axiale Komponente der Klemmkraft.

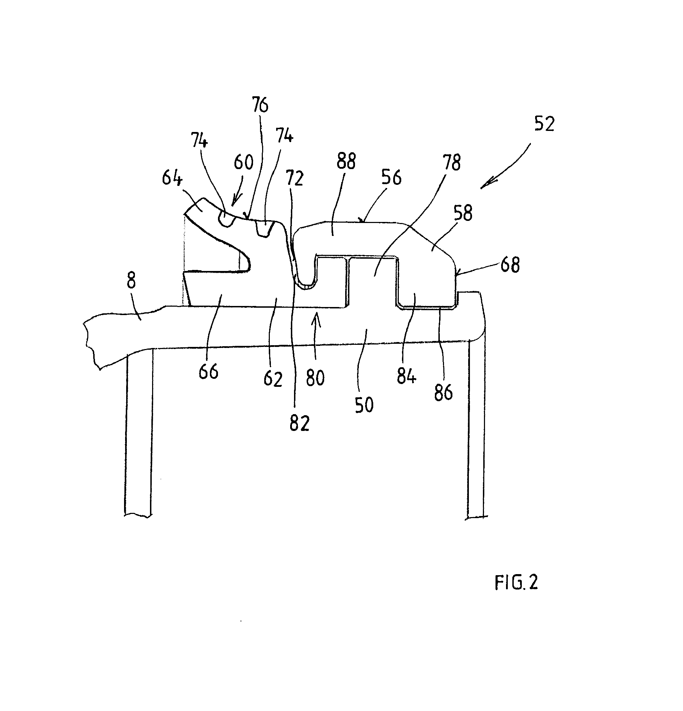

Wie am besten anhand von Fig.2 zu sehen ist, trägt der Federspeicherbremskolben 8 an seiner radial äußeren Umfangsfläche, genauer an seinem Kolbenhemd 50 eine Dichtungsanordnung 52, zur Abdichtung der die Speicherfeder 10 beinhaltenden Federkammer 14 gegenüber der be- und entlüftbaren Federspeicherbremskammer 12 des Federspeicherbremszylinders 4.

Die Dichtungsanordnung 52 weist einen den Federspeicherbremskolben 8 gegenüber einer in Fig.1 gezeigten Lauffläche 54 des Federspeicherbremszylinders 4 mit seiner radial äußeren Arbeitsfläche 56 führenden Führungsring 58 und wenigstens ein mit seinem Dichtungsabschnitt 60 gegen die Lauffläche 54 des Federspeicherbremszylinders 4 dichtendes Dichtungselement 62, wobei die Arbeitsfläche 56 des Führungsrings 58 dem Dichtungsabschnitt 60 des Dichtungselements 62 in einer Strömungsrichtung der Druckluft von der Federkammer 14 in die Federspeicherbremskammer 12 gesehen vorgeordnet ist. Der Führungsring 58 besteht bevorzugt aus einem gegenüber dem Material des Dichtungselements 62 steiferen Material. Insbesondere besteht der Führungsring 58 aus einem steifen Kunststoff wie Acetal und das Dichtungselement 62 aus einem demgegenüber elastischeren Elastomer. Die Federspeicherbremskolbenstange 18, der Federspeicherbremskolben 8 und die Zwischenwand 6 bestehen bevorzugt aus Aluminium.

Während daher die Arbeitsfläche 56 des steifen Führungsrings 58 den Federspeicherbremskolben 8 entlang der Lauffläche 54 des Federspeicherbremszylinders 4 führt, bildet das elastische Dichtungselement 62 die zugeordnete Bewegungsdichtung.

An der vom Führungsring 58 weg weisenden Seite des Dichtungselements 62 ragt dessen Dichtungsabschnitt 60 axial heraus, der an seinem vom Führungsring 58 weg weisenden Ende einen schwalbenschwanzförmigen Querschnitt aufweist, wie Fig.2 am besten zeigt. Dabei dichtet der eine, radial äußere Schenkel 64 mit einer Wirkfläche 76 gegen die Lauffläche 54 des Federspeicherbremszylinders 4 und der andere, radial innere Schenkel 66 gegen das Kolbenhemd 50 des Federspeicherbremskolbens 8.

Weiterhin ist die radial äußere, mit der Lauffläche 54 des Federspeicherbremszylinders 4 dichtend zusammen wirkende Wirkfläche 76 des radial äußeren Schenkels 64 des Dichtungselements 62 mit beispielsweise zwei, in Bezug zur Umfangsrichtung des Dichtungselements 62 umlaufenden Ringnuten 74 versehen. Dabei sind die Ringnuten in Axialrichtung oder in Richtung der Zylinderachse 46 gesehen axial hintereinander angeordnet. Diese Ringnuten 74 reduzieren störende Geräusche aufgrund von Luftströmungen zwischen der Federkammer 14 und der Federspeicherbremskammer 12, wie eingangs beschrieben wurde. Dabei sind diese Ringnuten 74 im wesentlichen senkrecht zur Richtung dieser Strömung angeordnet.

### Weiterhin ist vorgesehen, dass

a) die radial äußere Umfangsfläche des Kolbenhemds 50 des Federspeicherbremskolbens 8 einen wenigstens teilweise umlaufenden Vorsprung 78 aufweist,
b) das Dichtungselement 62 an einem dem Dichtungsabschnitt 60 in Strömungsrichtung von der Federkammer 14 in die Federspeicherbremskammer 12 gesehen vorgeordneten Lagerabschnitt 80 eine radial äußere, wenigstens teilweise umlaufende Ausnehmung 82 aufweist,
c) der Führungsring 58 derart radial elastisch aufweitbar ist, dass er unter radial elastischer Aufweitung und anschließender Rückfederung
d) mit einem Lagerabschnitt 84 in eine radial äußere Ausnehmung 86 am Kolbenhemd 50 des Federspeicherbremskolbens 8 eingreift und
e) mit einem die zum Dichtungsabschnitt 60 des Dichtungselements 62 weisende Stirnfläche 72 beinhaltenden Halteabschnitt 88 wenigstens den Vorsprung 78 des Kolbenhemds axial übergreifend und in die Ausnehmung 82 des Lagerabschnitts 84 des Dichtungselements 62 radial eingreifend das Dichtungselement 62 am Kolbenhemd 50 des Federspeicherbremskolbens 8 hält.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Rand
- 50: Kolbenhemd
- 52: Dichtungsanordnung
- 54: Lauffläche
- 56: Arbeitsfläche
- 58: Führungsring
- 60: Dichtungsabschnitt
- 62: Dichtungselement
- 64: Schenkel
- 66: Schenkel
- 68: Stirnfläche
- 72: Stirnfläche
- 74: Ringnut
- 76: Wirkfläche
- 78: Vorsprung
- 80: Lagerabschnitt
- 82: Ausnehmung
- 84: Lagerabschnitt
- 86: Ausnehmung
- 88: Halteabschnitt

## Patentansprüche

1. Pneumatischer Federspeicherbremszylinder (1) für Bremsanlagen von Fahrzeugen, mit einem im Gehäuse des Federspeicherbremszylinders (4) angeordneten, durch wenigstens eine Speicherfeder (10) betätigbaren Federspeicherbremskolben (8), wobei der Federspeicherbremskolben (8) an seiner radial äußeren Umfangsfläche eine als Bewegungsdichtung ausgebildete Dichtungsanordnung (52) trägt, welche wenigstens ein Dichtungselement (62) mit einem Dichtungsabschnitt (60) beinhaltet, welcher einen schwalbenschwanzförmigen Querschnitt mit zwei sich radial elastisch aufspreizenden Schenkeln (64, 66) aufweist, wobei der eine Schenkel (64) gegen den Federspeicherbremszylinder (4) und der andere Schenkel (66) gegen den Federspeicherbremskolben (8) dichtet, **dadurch gekennzeichnet, dass** der gegen den Federspeicherbremszylinder (4) dichtende Schenkel (64) des Dichtungselements (62) an seiner mit einer Lauffläche (54) des Federspeicherbremszylinders (4) zusammen wirkenden Wirkfläche (76) mit wenigstens einer in Bezug zur Umfangsrichtung umlaufenden Ringnut (74) versehen ist.

2. Federspeicherbremszylinder nach Anspruch 1, **dadurch gekennzeichnet, dass** der gegen den Federspeicherbremszylinder (4) dichtende Schenkel (64) des Dichtungselements (62) an seiner mit der Lauffläche (54) des Federspeicherbremszylinders (4) zusammen wirkenden Wirkfläche (76) mit wenigstens zwei, in Axialrichtung (46) des Federspeicherbremszylinders (4) gesehen hintereinander angeordneten Ringnuten (74) versehen ist.

3. Federspeicherbremszylinder nach einem der vorhergehenden Ansprüche, **dadurch gekennzeichnet, dass** die Dichtungsanordnung (52) weiterhin einen den Federspeicherbremskolben (8) gegenüber einer Lauffläche (54) des Federspeicherbremszylinders (4) mit seiner radial äußeren Arbeitsfläche (56) führenden Führungsring (58) beinhaltet, wobei die Arbeitsfläche (56) des Führungsrings (58) dem Dichtungsabschnitt (60) des Dichtungselements (62) in Strömungsrichtung von der Federkammer (14) in die Federspeicherbremskammer (12) gesehen vorgeordnet ist und der Führungsring (58) aus einem gegenüber dem Material des wenigstens einen Dichtungselements (62) steiferen Material besteht.

4. Federspeicherbremszylinder nach Anspruch 3, **dadurch gekennzeichnet, dass**
a) die radial äußere Umfangsfläche des Kolbenhemds (50) des Federspeicherbremskolbens (8) einen wenigstens teilweise umlaufenden Vorsprung (78) aufweist,
b) das Dichtungselement (62) an einem dem Dichtungsabschnitt (60) in Strömungsrichtung von der Federkammer (14) in die Federspeicherbremskammer (12) gesehen vorgeordneten Lagerabschnitt (80) eine radial äußere, wenigstens teilweise umlaufende Ausnehmung (82) aufweist,
c) der Führungsring (58) derart radial elastisch aufweitbar ist, dass er unter radial elastischer Aufweitung und anschließender Rückfederung
d) mit einem Lagerabschnitt (84) in eine radial äußere Ausnehmung (86) am Kolbenhemd (50) des Federspeicherbremskolbens (8) eingreift und
e) mit einem die zum Dichtungsabschnitt (60) des Dichtungselements (62) weisende Stirnfläche (72) beinhaltenden Halteabschnitt (88) wenigstens den Vorsprung (78) des Kolbenhemds axial übergreifend und in die Ausnehmung (82) des Lagerabschnitts (84) des Dichtungselements (62) radial eingreifend das Dichtungselement (62) am Kolbenhemd (50) des Federspeicherbremskolbens (8) hält.

5. Federspeicherbremszylinder nach Anspruch 3 oder 4, **dadurch gekennzeichnet, dass** der Führungsring (58) aus einem Kunststoff wie aus Acetal und das Dichtungselement (62) aus einem Elastomer besteht.

6. Federspeicherbremszylinder nach einem der vorhergehenden Ansprüche, **dadurch gekennzeichnet, dass** er mit einem Betriebsbremszylinder (2) zu einem kombinierten Betriebsbrems- und Federspeicherbremszylinder (1) zusammengefasst ist und der Betriebsbremszylinder (2) einen im Gehäuse des Betriebsbremszylinders (2) angeordneten Betriebsbremskolben (26) aufweist.
